# EUROPÄISCHE PATENTSCHRIFT

(11) **EP 4 354 006 B1**
(45) Veröffentlichungstag und Bekanntmachung des Hinweises auf die Patenterteilung: **10.12.2025**
(21) Anmeldenummer: 23202958.7
(22) Anmeldetag: 11.10.2023
(51) Int. Cl.: F16L 27/08, F16L 27/107, F16L 27/12, F16L 37/244, F01N 13/18, F16L 55/10

(54) **VORRICHTUNG ZUR ABGASÜBERGABE ZWISCHEN DURCH EIN KNICK-DREHGELENK GETRENNTEN VORDER- UND HINTERWAGEN EINER MOBILEN ARBEITSMASCHINE**
DEVICE FOR THE EXHAUST GAS TRANSFER BETWEEN A FRONT AND REAR VEHICLE OF A MOBILE WORKING MACHINE WHICH ARE SEPARATED BY AN ARTICULATED SWIVEL JOINT
DISPOSITIF DE TRANSFERT DE GAZ D'ÉCHAPPEMENT ENTRE UN VÉHICULE AVANT ET UN VÉHICULE ARRIÈRE D'UNE MACHINE DE TRAVAIL MOBILE SÉPARÉS PAR UN JOINT ARTICULÉ ROTATIF

(30) Priorität: 11.10.2022 DE 102022126255
(43) Veröffentlichungstag der Anmeldung: 17.04.2024
(73) Patentinhaber: Liebherr-Hydraulikbagger GmbH, 88457 Kirchdorf/Iller (DE)
(72) Erfinder: LOCHER, Thomas, 88483 Burgrieden (DE); GÖGGEL, Fabian, 88515 Langenenslingen (DE)
(74) Vertreter: Lorenz Seidler Gossel Part. mbB

(56) Entgegenhaltungen:
- EP-B1- 2 366 931
- WO-A1-2015/152791
- DE-U1- 202010 002 274
- US-A- 3 869 151

## Beschreibung

Die vorliegende Erfindung betrifft eine Vorrichtung zur Abgasübergabe zwischen einem durch ein Knick-Drehgelenk getrennten Vorder- und Hinterwagen einer mobilen Arbeitsmaschine, bspw. einer Baumaschine von der Art eines Muldenkippers.

Für bestimmte Arbeitseinsätze ist es von Vorteil, wenn mobile Arbeitsmaschinen aus einem Vorderwagen und einem Hinterwagen bestehen, die durch ein Knick-Drehgelenk miteinander in Verbindung stehen. Eine solche Konfiguration wird bspw. für Muldenkipper herangezogen, bei der das Führerhaus mit dem Antriebsmotor der mobilen Arbeitsmaschine auf dem Vorderwagen und die Mulde zum Aufnehmen einer Nutzlast auf dem Hinterwagen angeordnet ist. Die Lenkung einer solchen mobilen Arbeitsmaschine kann dann eine Knicklenkung umfassen, die eine Richtungsänderung der mobilen Arbeitsmaschine dadurch erzeugt, dass der Vorderwagen gegenüber dem Hinterwagen mithilfe des Knick-Drehgelenks ausgelenkt wird.

Die Verbindung des Vorderwagens mit dem Hinterwagen über das Knick-Drehgelenk ermöglicht unabhängige Bewegungen von Vorder- und Hinterwagen und ermöglicht so eine besondere Wendigkeit und Manövrierfähigkeit der Arbeitsmaschine.

Aus der US 3 869 151 A ist eine flexible Rohrverbindung für Hochdrucksysteme gezeigt, die durch interne Unterstützung eine gleichmäßige Biegeradienverteilung ermöglicht und so Biegespannungen reduziert sowie die Lebensdauer erhöht. Innerhalb der flexiblen Leitung sind zwei Gelenkverbindungen angeordnet: universelle Gelenke, die die Enden eines internen Trägers mit den Enden der Rohrleitung verbinden, und ein Kugelgelenk, das zwei Hebelarme miteinander verbindet, um die Bewegung zu steuern. Diese Konstruktion verhindert seitliche Verschiebungen und schafft eine gleichmäßige Biegung auch bei hohen Innendrücken und großen Ablenkwinkeln. Dadurch wird eine flexible Rohrverbindungen unter anspruchsvollen Druckbedingungen geschaffen.

Problematisch aus den aus dem Stand der Technik bekannten mobilen Arbeitsmaschinen, die über ein Knick-Drehgelenk verfügen, ist, dass der Antriebsmotor entweder auf dem Vorder- oder dem Hinterwagen angeordnet ist und eine davon abgehende Abwärme oftmals auch auf dem anderen Wagenabschnitt gebraucht wird, auf dem der Antriebsmotor nicht angeordnet ist.

So wird bei einem Muldenkipper die Abwärme des Antriebsmotors dazu genutzt, eine Mulde zu erwärmen, damit es bei Temperaturen unterhalb des Gefrierpunkts nicht zu einem Anfrieren von Bestandteilen der transportierten Nutzlast an der Mulde kommt. So kann es durchaus vorkommen, dass eine in die Mulde gegebene feuchte Erde an der Mulde anfriert, sodass es bei einem Entladevorgang nicht zu einem vollständigen Entleeren der Mulde kommt was die Transporteffizienz verschlechtert.

Die bei dem Betrieb des Antriebsmotors anfallende Abwärme wird nach dem Stand der Technik dazu genutzt, die Mulde zu beheizen, damit es nicht zu den oben beschriebenen negativen Effekten kommt. Somit ist es möglich, auch bei Temperaturen unter 0 °C ein reibungsloses Entleeren der Mulde zu gewährleisten, da diese im Bereich zum Kontakt zur Nutzlast mithilfe der Abwärme des Antriebsmotors erwärmt wird und ein Anfrieren von Teilen der Nutzlast unterbindet.

Insbesondere kommt dabei als Abwärme das Abgas eines Antriebsmotors in Betracht, das beim Betrieb einer Verbrennungskraftmaschine, bspw. eines Dieselmotors anfällt.

Dabei ist es besonders aufwendig eine Verbindung zwischen dem Vorder- und dem Hinterwagen zu erstellen, über die das Heizmedium (Abgas) zum Erwärmen der Mulde geführt wird. Das Knick-Drehgelenk ermöglicht eine Vielzahl von Stellungen des Vorderwagens und des Hinterwagens zueinander, sodass die aus dem Stand der Technik bekannten Umsetzungen allesamt sehr komplex und verschleißanfällig sind. Oftmals basiert die aus dem Stand der Technik bekannte Abgasübergabe auf dem Kugel-Schalen-Prinzip, bei dem bspw. ein kugelförmiges Element mit einer Bohrung als Gasauslass dient, an dem eine an die Kugel angesetzte Schale vorgesehen ist, welche die Bohrung umschließt, sodass möglichst viele Bewegungen die Gasverbindung der beiden Bestandteile nicht unterbrechen.

Nachteilhaft an einer solchen Verbindung ist, dass diese einen sehr hohen Verschleiß aufweist und folglich zu einem erhöhten Wartungsaufwand führt. Zudem kommt es oftmals auch zu massiven Schadensbildern im Bereich der Abgasübergabe, die sich bspw. bei einem Umkippen der Mulde und einem dadurch gewaltsam erfolgten Trennen der Abgasübergabe ergeben. Darüber hinaus sind die aus dem Stand der Technik bekannten Umsetzungen zur Abgasübergabe allesamt komplex und verfügen über eine große Anzahl an Bauteilen, die die Produktion einer solchen Abgasübergabe zwischen Vorderwagen und Hinterwagen teuer machen.

Es ist das Ziel der vorliegenden Erfindung eine solche Abgasübergabe zwischen einem Vorderwagen und einem Hinterwagen, die über ein Knick-Drehgelenk miteinander verbunden sind, vorzusehen, die die oben beschriebenen Probleme nicht mehr aufweist oder zumindest abmildert.

Dies gelingt mit einer Vorrichtung zur Abgasübergabe, die sämtliche Merkmale des Anspruchs 1 aufweist. Vorteilhafte Ausgestaltungen der beanspruchten Vorrichtung finden sich dabei in den abhängigen Ansprüchen. Darüber hinaus wird auch eine die beanspruchte Vorrichtung aufweisende mobile Arbeitsmaschine vorgestellt, die gegenüber den aus dem Stand der Technik bekannten mobilen Arbeitsmaschinen u.a. in vorteilhafter Weise modifiziert ist, um eine Nutzung der Vorrichtung zur Abgasübergabe möglichst optimal umzusetzen.

Nach der Erfindung ist eine Vorrichtung zur Abgasübergabe zwischen einem durch ein Knick-Drehgelenk getrennten Vorder- und Hinterwagen einer mobilen Arbeitsmaschine vorgesehen, insbesondere ein Muldenkipper, der einen in seiner Länge variierbaren Rohrabschnitt, um Abgas zu leiten, einen ersten flexiblen Schlauch, der mit einem ersten Endbereich des Rohrabschnitts zusammenwirkt, um Abgas in den Rohrabschnitt einzuleiten, und einen zweiten flexiblen Schlauch umfasst, der mit einem zweiten Endbereich des Rohrabschnitts zusammenwirkt, um Abgas aus dem Rohrabschnitt auszuleiten. Die Vorrichtung ist dadurch gekennzeichnet, dass eine erste Gelenkwelle im ersten Endbereich vorgesehen ist, deren distales Ende für eine starre Anbringung an einem Befestigungsabschnitt des Vorderwagens oder des Hinterwagens der Arbeitsmaschine ausgebildet ist, und eine zweite Gelenkwelle im zweiten Endbereich vorgesehen ist, deren distales Ende für eine starre Anbringung an einem Befestigungsabschnitt des Vorderwagens oder des Hinterwagens der Arbeitsmaschine ausgebildet ist, wobei der erste Schlauch die erste Gelenkwelle und der zweite Schlauch die zweite Gelenkwelle aufnimmt.

Die Erfindung schlägt dabei vor, den in seiner Länge variierbaren Rohrabschnitt der Abgasübergabe zwischen Vorderwagen und Hinterwagen der mobilen Arbeitsmaschine mithilfe von Gelenkwellen anzuordnen. Dabei wird also bspw. die eine Seite des Rohrabschnitts mithilfe einer ersten Gelenkwelle an dem Vorderwagen und die andere Seite des Rohrabschnitts mithilfe einer zweiten Gelenkwelle an dem Hinterwagen befestigt. Damit nun auch eine möglichst leckagefreie Leitung des Abgases von dem Vorderwagen hin zum Hinterwagen erfolgt (oder umgekehrt), ist ein erster flexibler Schlauch, der das erste Ende des Rohrabschnitts mit einem Übergabepunkt für das Abgas am Vorderwagen verbindet, und ein zweiter flexibler Schlauch, der das zweite Ende des Rohrabschnitts mit einem Übergabepunkt für das Abgas am Hinterwagen verbindet, vorgesehen. Der erste Schlauch nimmt dabei die erste Gelenkwelle und der zweite Schlauch die zweite Gelenkwelle auf, so dass in einem angeschlossenen Zustand der Vorrichtung zur Abgasübertragung die erste Gelenkwelle und die zweite Gelenkwelle von durch die Vorrichtung zur Abgasübergabe geleitetem Abgas umströmt werden.

Dabei kann vorgesehen sein, dass die erste Gelenkwelle starr mit dem ersten Endbereich des Rohrabschnitts und die zweite Gelenkwelle starr mit dem zweiten Endbereich des Rohrabschnitts in Verbindung steht, bzw. starr an einem jeweiligen Endbereich des Rohrabschnitts angeordnet ist.

Der erste Schlauch wie auch der zweite Schlauch kann nach einer Fortbildung der vorliegenden Erfindung ein glasfaserverstärkter Hochtemperatur-Spiralschlauch sein, der um die jeweiligen Gelenkwellen geführt ist.

Nach einer optionalen Modifikation der vorliegenden Erfindung kann vorgesehen sein, dass die erste Gelenkwelle und/oder die zweite Gelenkwelle ein Kardangelenk oder ein Kreuzgelenk ist/sind. Insbesondere kann dabei vorgesehen sein, dass eine erste Achse des Kreuzgelenks oder auch beide Achsen eine der beiden Gelenkwellen durch eine Knickachse der Knick-Drehachse geschnitten wird.

Nach einer weiteren Fortbildung der vorliegenden Erfindung kann vorgesehen sein, dass der in seiner Länge variierbare Rohrabschnitt zwei Bestandteile, auf (bspw. zwei Metallrohre) unterschiedlichen Durchmessers umfasst, die ineinander ein- oder ausschiebbar sind. Demnach kann also der in seiner Länge variierbare Rohrabschnitt zwei Rohrbestandteile umfassen, die nach der Art eines Teleskopauszugs miteinander in Verbindung stehen. Ein erster Rohrbestandteil besitzt dabei einen ersten Durchmesser und ein zweiter Rohrbestandteil besitzt einem gegenüber dem ersten Rohrbestandteil verringerten Durchmesser, sodass dieser in den ersten Rohrbestandteil ein- und ausschiebbar ist.

Ferner kann dabei vorgesehen sein, dass der Rohrabschnitt mit größerem Durchmesser ein am Innenumfang angeordnetes Anschlagelement, insbesondere einen umlaufenden Ring, und der Rohrabschnitt mit kleinerem Durchmesser ein am Außenumfang angeordnetes Anschlagelement, insbesondere einen umlaufenden Ring, aufweist, sodass durch die jeweiligen Anschlagelemente eine maximale Länge des in seiner Länge variierbaren Rohrabschnitts festgelegt ist.

Durch das Vorsehen der jeweiligen Anschlagelemente wird sichergestellt, dass nach einem Erreichen der maximalen Länge des Rohrabschnitts die beiden Rohrbestandteile sich nicht durch weiteres Ausziehen ohne weiteres voneinander trennen.

Nach einer vorteilhaften Modifikation der vorliegenden Erfindung kann vorgesehen sein, dass der Rohrabschnitt zwischen dem ersten Endbereich und dem zweiten Endbereich eine Trenneinrichtung umfasst, die dazu ausgelegt ist, nach einem Erreichen der maximalen Länge des Rohrabschnitts und einem weiteren Einwirken einer Kraft in Richtung eines weiteren Verlängern des Rohrabschnitts den Rohrabschnitt kontrolliert aufzutrennen, sodass der erste Endbereich und der zweite Endbereich nicht mehr über einen durch den Rohrabschnitt verlaufenden Strömungskanal miteinander in Verbindung stehen.

Die Trenneinrichtung bewirkt eine Trennung des Rohrabschnitts, wenn eine entsprechende Kraft in Längsrichtung des Rohrabschnitts auch dann einwirkt, wenn die maximale Länge des Rohrabschnitts bereits erreicht worden ist. Die Trenneinrichtung bewirkt das gezielte Trennen des Rohrabschnitts und verhindert dadurch schwerwiegende und möglicherweise irreversible Beschädigungen der Vorrichtung zur Abgasübergabe, die auftreten würden, wenn ein gezieltes Trennen nicht möglich ist. Insbesondere kann ein solcher Fall auftreten, wenn eine besonders starke Verdrehung von Vorderwagen zum Hinterwagen auftritt, wie sie bspw. bei einem Umkippen des die Mulde tragenden Hinterwagens gegenüber dem die Fahrerkabine tragenden Vorderwagens erfolgt. Nach dem Stand der Technik kommt es dabei zu einem unkontrollierten Abreißen der Abgasübergabe zwischen Vorder- und Hinterwagen, sodass nach einem Aufrichten des umgekippten Hinterwagens der reibungslose Weiterbetrieb der mobilen Arbeitsmaschine erst nach einem Werkstattbesuch möglich ist, in dem die dabei aufgetretenen Schäden an der Abgasübergabe behoben worden sind. Dies schränkt die Arbeitstauglichkeit der mobilen Arbeitsmaschine ein, und bindet Kapazitäten am Einsatzort der mobilen Arbeitsmaschine.

Nach einer vorteilhaften Gestaltung der vorliegenden Erfindung kann vorgesehen sein, dass die Trenneinrichtung zwei sich in Längsrichtung des Rohrabschnitts überlagernde Trennringe aufweist, die sich bei einem Überschreiten eines in Längsrichtung des Rohrabschnitts wirkenden Kraftschwellenwerts voneinander trennen.

Demnach können also zwei voneinander trennbare Ringe vorgesehen sein, die aneinander angreifen, vorzugsweise wobei einer der Ringe mit seinem Innenumfang an dem Außenumfang des anderen Rings angeordnet ist. Dabei kann vorgesehen sein, dass die beiden Trennringe zueinander geklemmt sind und sich die Klemmung nur bei Überschreiten einer vorbestimmten Kraft lösen lässt, die senkrecht zu der durch die Ringe gebildeten Fläche wirkt.

Dabei kann unter anderem vorgesehen sein, dass der erste Trennring an seiner Außenkontur oder seiner Innenkontur eine Mulde aufweist und der zweite Trennring ein Druckfederelement aufweist, um in die Mulde des ersten Trennrings einzugreifen, wobei vorzugsweise das Druckfederelement eine Kugel und ein Federelement aufweist, um die Kugel mit Federkraft in Richtung der Mulde des ersten Trennrings zu drängen, sodass eine Verbindung der beiden Trennringe nur dann erfolgt, wenn eine die beiden Trennringe auseinanderziehende Kraft dazu führt, dass die in der Mulde befindliche Kugel entgegen der Federspannung bewegt wird und es durch ein Herausgleiten der Kugel aus der Mulde zu einem Trennen der Trennringe kommt.

Ferner kann dabei vorgesehen sein, dass die Trenneinrichtung nach einem Trennen durch eine Art Bajonettverschluss wieder zusammenfügbar ist, insbesondere wobei die Mulde die typische Hakenform einer Bajonettführung des Bajonettverschlusses aufweist und das Druckfederelement das entsprechend in die Bajonettführung einzuführende Verriegelungselement darstellt.

Der Bajonettverschluss wird demnach also durch die Mulde in dem einen Trennring und dem in der Mulde anzuordnenden Druckfederelement des anderen Trennrings verkörpert, sodass auch bei einem unerwünschten Trennen der Trenneinrichtung die beiden voneinander getrennten Bestandteile ohne Werkzeug und ohne die Notwendigkeit eines Werkstattbesuchs wieder zusammengefügt werden können. Kommt es also bspw. zu einem Umkippen des mit der Mulde versehenen Hinterwagens, so löst die Trenneinrichtung aus, damit es nicht zu einer Beschädigung von Bestandteilen der Vorrichtung zur Abgasübergabe kommt. Nach einem Aufrichten des Hinterwagens kann dann durch den Bediener der mobilen Arbeitsmaschine die Vorrichtung zur Abgasübergabe wieder zusammengefügt werden, indem die durch die Trenneinrichtung getrennten Bestandteile von Hand und ohne die Notwendigkeit von Werkzeug zusammengefügt werden.

Nach einer weiteren Fortbildung der vorliegenden Erfindung kann vorgesehen sein, dass die erste Gelenkwelle und/oder die zweite Gelenkwelle über eine Verbindung, insbesondere eine Sternverbindung, die vom Innenumfang des zugehörigen Endbereichs abgeht, am Rohrabschnitt befestigt ist. Dabei ergibt sich die Sternverbindung dadurch, dass an der Innenseite des Endbereichs jeweils mehrere Stege nach innen abstehen und sich an einem Punkt vereinigen, von dem dann die Gelenkwelle abgeht.

Nach einer weiteren Modifikation der vorliegenden Erfindung kann vorgesehen sein, dass der erste Schlauch und/oder der zweite Schlauch mittels einer Spannschelle an dem zugehörigen Endbereich angebunden ist.

Die Anwendung mittels einer Spannschelle ist einfach und millionenfach erprobt, sodass eine langlebige und bewährte Verbindung des Schlauchs an dem zugehörigen Endbereich auf einfache Art und Weise durchführbar ist.

Die Erfindung betrifft zudem eine mobile Arbeitsmaschine, insbesondere ein Baufahrzeug wie ein Muldenkipper, mit einem durch ein Knick-Drehgelenk voneinander getrennten Vorder- und Hinterwagen mit einer Abgasübergabe nach einem der vorhergehenden Ansprüche zum Überführen eines Abgase zwischen Vorder- und Hinterwagen über das Knick-Drehgelenk hinweg, wobei insbesondere vorgesehen ist, dass die erste Gelenkwelle oder die zweite Gelenkwelle direkt über der Knickachse des Knick-Drehgelenks angeordnet ist.

Insbesondere ist es von Vorteil, wenn die Arbeitsmaschine so ausgestaltet ist, dass die Achse des Knickgelenks des Knick-Drehgelenks eine Achse der ersten oder zweiten Gelenkwelle (insbesondere Kreuzgelenks oder Kardangelenk) schneidet bzw. mit einer solchen Achse fluchtet. Dies ist von Vorteil, da dadurch ein durch Lenkbewegungen normalerweise erforderlicher Längenausgleich des Rohrabschnitts der Abgasübergabe vollständig entfällt, was sich äußerst positiv auf den Verschleiß der Vorrichtung zur Abgasübergabe auswirkt. Demnach bewirkt ein Lenkeinschlag der mobilen Arbeitsmaschine, hervorgerufen durch einen Knick im Übergang von dem Vorderwagen zu dem Hinterwagen, keine Längenvariation im Rohrabschnitt der Abgasübergabe, sodass ein Großteil des regulären Arbeitsbetriebs der mobilen Arbeitsmaschine keine verschleißintensive Längenvariation des Rohrabschnitts erfordert.

Ferner kann nach einer Fortbildung der vorliegenden Erfindung vorgesehen sein, dass ein erster Befestigungsabschnitt zum Abgeben des Abgases an die Abgasübergabe gegenüber der Horizontalen einen Neigungswinkel im Bereich von 0-35°, vorzugsweise 5-30° und bevorzugterweise 15-25° aufweist.

Dabei kann ferner vorgesehen sein, dass ein zweiter Befestigungsabschnitt zum Aufnehmen des Abgases von der Abgasübergabe gegenüber der Horizontalen einen Neigungswinkel im Bereich von 0-35°, vorzugsweise 5-30° und bevorzugterweise 15-25° aufweist.

In einer weiteren Fortbildung der vorliegenden Erfindung kann dabei vorgesehen sein, dass der erste Befestigungsabschnitt und der zweite Befestigungsabschnitt jeweils einen Neigungswinkel aufweisen, der in seinem Vorzeichen gegenüber einer Neigung der Horizontalen verschieden ist, sodass bspw. der erste Befestigungsabschnitt gegenüber der Horizontalen um +20° unter zweite Befestigungsabschnitt um -20° gegenüber der Horizontalen ausgelenkt ist.

Nach einer weiteren optionalen Modifikation der vorliegenden Erfindung kann vorgesehen sein, dass der erste Befestigungsabschnitt und/oder der zweite Befestigungsabschnitt in seinem zur Abgasübergabe gewandten Endabschnitt jeweils über eine Befestigungsvorrichtung, insbesondere einer Sternverbindung, mit der zugehörigen Gelenkwelle starr verbunden ist.

Weitere Einzelheiten, Merkmale und Vorteile der Erfindung werden anhand der nachfolgenden Figurenbeschreibung ersichtlich. Dabei zeigen:
- Fig. 1:: eine Seitenansicht einer mobilen Arbeitsmaschine, welche die erfindungsgemäße Vorrichtung zur Abgasübergabe vom Vorderwagen zum Hinterwagen aufweist,
- Fig. 2:: eine Schnittdarstellung der Vorrichtung zur Abgasübergabe in einer Seitenansicht,
- Fig. 3:: eine Perspektivdarstellung der Vorrichtung zur Abgasübergabe,
- Fig. 4a:: eine Perspektivdarstellung der Vorrichtung zur Abgasübergabe bei einem gegenüber dem Vorderwagen leicht verdrehten Hinterwagen,
- Fig. 4b:: eine Perspektivdarstellung der Vorrichtung zur Abgasübergabe bei einem gegenüber dem Vorderwagen verdrehten Hinterwagen,
- Fig. 4c:: eine Perspektivdarstellung der Vorrichtung zur Abgasübergabe bei einem gegenüber dem Vorderwagen stark verdrehten Hinterwagen,
- Fig. 5:: eine Schnittansicht der Vorrichtung zur Abgasübergabe zusammen mit den entsprechenden Befestigungsabschnitten am Vorderwagen und am Hinterwagen,
- Fig. 6:: eine Schnittansicht der Vorrichtung zur Abgasübergabe zusammen mit einem ersten Schlauch und einem zweiten Schlauch zum fluidischen Anbinden von Vorderwagen und Hinterwagen,
- Fig. 7:: eine Draufsicht auf den ersten Endbereich des Rohrabschnitts, an dem der erste Schlauch mit einer Spannschelle angebunden ist,
- Fig. 8:: eine Perspektivdarstellung eines Endbereichs des Rohrabschnitts mit einer Sternverbindung zum Anordnen einer Gelenkwelle,
- Fig. 9a:: eine Frontalansicht einer mobilen Arbeitsmaschine in Form eines Muldenkörpers, bei dem der Hinterwagen mit der Mulde gegenüber dem Vorderwagen verdreht ist,
- Fig 9b:: eine Darstellung der Vorrichtung zur Abgasübergabe bei nach Fig. 9a dargestellten gegenüber dem Vorderwagen verdrehten Hinterwagen,
- Fig. 10:: eine Schnittansicht einer Trenneinrichtung zum beschädigungsfreien Auftrennen einer Fluidverbindung zwischen Vorder- und Hinterwagen im Rohrabschnitt, und
- Fig. 11: eine Explosionsansicht der Trenneinrichtung, die in der Art eines Bajonettverschlusses zusammenführbar ist.

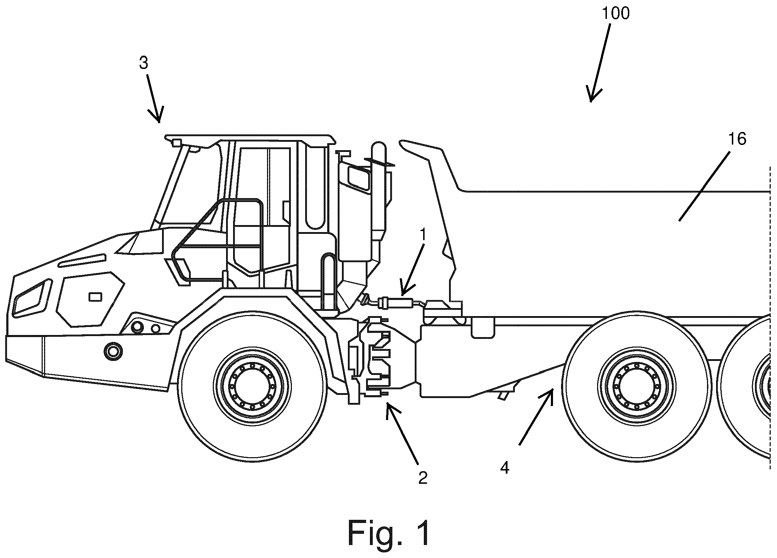

Fig. 1 zeigt eine Seitenansicht einer mobilen Arbeitsmaschine 100, welche die erfindungsgemäße Vorrichtung 1 zur Abgasübergabe vom Vorderwagen 3 zum Hinterwagen 4 aufweist. Man erkennt, dass der Vorderwagen 3 mit einer Fahrerkabine versehen ist, von der aus ein Bediener die mobile Arbeitsmaschine 100 steuern kann. Über ein Knick-Drehgelenk 2 ist der Hinterwagen 4 an dem Vorderwagen 3 angelenkt, sodass durch eine Knickbewegung des Vorderwagens 3 gegenüber dem Hinterwagen 4 eine Lenkung der mobilen Arbeitsmaschine 100 erfolgt. Um auch verschiedene Neigungen des Terrains, welche unterhalb des Vorderwagens 3 bzw. des Hinterwagens 4 herrschen, abzufangen, ist auch eine Verdrehung des Vorderwagens 3 gegenüber dem Hinterwagen 4 mithilfe des Knick-Drehgelenks 2 möglich. Die Achse, um welche eine Drehung des Hinterwagen 4 gegenüber dem Vorderwagen 3 erfolgen kann, verläuft dabei in der Horizontalen und erstreckt sich in Längsrichtung der mobilen Arbeitsmaschine 100.

Darüber hinaus erkennt man die Vorrichtung 1 zur Abgasübergabe, welche den Vorderwagen 3 mit dem Hinterwagen 4 verbindet. In der Regel wird Abgas dazu genutzt, die Mulde 16, die am Hinterwagen 4 angeordnet ist, zu erwärmen, damit bei niedrigen Temperaturen ein Anfrieren von in der Mulde transportierten Transportgut nicht erfolgt.

Der Antriebsmotor zum Antreiben der mobilen Arbeitsmaschine 100 ist dabei an dem Bestandteil der Arbeitsmaschine angeordnet, welcher von der Mulde 16 beabstandet ist. In anderen Worten bedeutet dies, dass bspw. die Mulde 16 am Hinterwagen 4 angeordnet ist und der Antriebsmotor am Vorderwagen 3. Dem Fachmann ist aber klar, dass auch eine umgekehrte Anordnung von Mulde 16 und Antriebsmotor bzw. Fahrerkabine von der Erfindung umfasst ist, sodass auch die Mulde an dem Vorderwagen 3 und der Antriebsmotor am Hinterwagen 4 angeordnet sein kann.

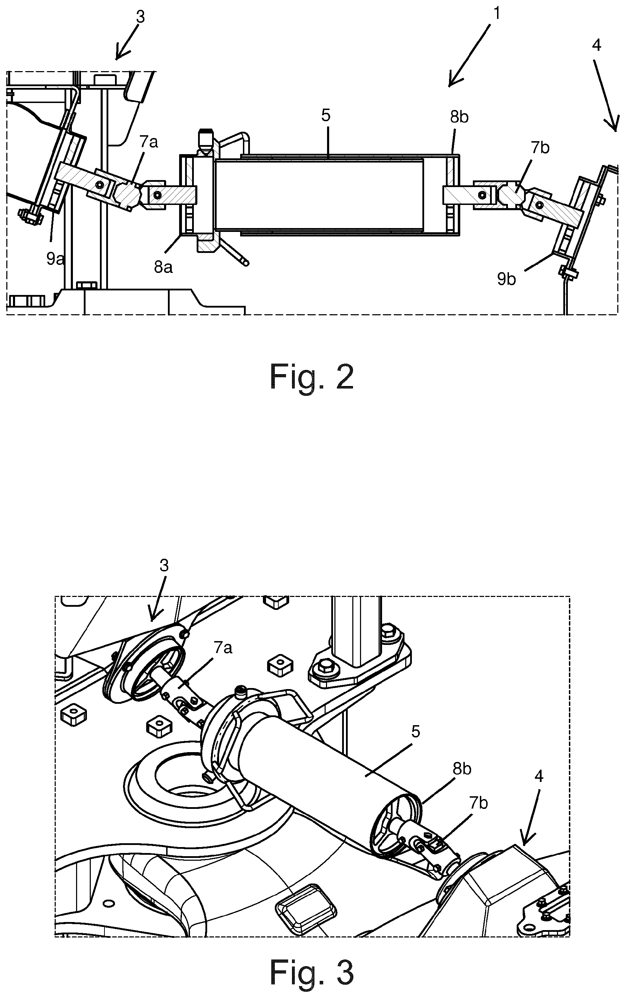

Fig. 2 zeigt eine Schnittdarstellung der Vorrichtung 1 zur Abgasübergabe in einer Seitenansicht. Man erkennt, dass die Vorrichtung 1 zur Abgasübergabe zwischen einem Vorderwagen 3 und einem Hinterwagen 4 angeordnet ist.

Am Vorderwagen 3 ist im Bereich des ersten Befestigungsabschnitts 9a die erste Gelenkwelle 7a befestigt, die sich hin zum ersten Befestigungsbereich 8a erstreckt. Selbiges gilt auch für den hinteren Bereich des Rohrabschnitts 5, bei dem vom zweiten Befestigungsbereich 8b die zweite Gelenkwelle 7b abgeht, die dann am zweiten Befestigungsabschnitt 9b des Hinterwagens 4 befestigt ist.

Die in Fig. 2 dargestellte Konfiguration zeigt nicht die zwischen dem Vorderwagen und dem Rohrabschnitt 5 bzw. zwischen dem Rohrabschnitt 5 und dem Hinterwagen 4 verlaufenden Schläuche, welche eine jeweilige Gelenkwelle 7a, 7b umgeben.

Man erkennt, dass der Rohrabschnitt 5 zwei Rohrbestandteile (bspw. zwei Metallrohre) umfasst, die nach der Art eines Teleskopauszugs miteinander verbunden sind. Demnach gibt es also einen ersten Rohrbestandteil, welcher in seinem Durchmesser geringer ist und ein dazu koaxial angeordneter zweiter Rohrbestandteil mit einem etwas größerem Durchmesser, in welchen der erste Rohrbestandteil eingeführt ist. Wendet man nun eine Kraft an, die zu einem Ausziehen der beiden ineinandergesteckten Rohrbestandteile führt, kommt es zu einer Längenvariation des Rohrabschnitts 5.

Die maximale Länge des Rohrabschnitts 5 ist dadurch begrenzt, dass die ineinander gesteckten Bestandteile des Rohrabschnitts 5 jeweils ein Anschlagelement 10a, 10b aufweisen, die in einem Zustand der maximalen Länge des Rohrabschnitts 5 aneinander anschlagen und ein weiteres Herausziehen der Rohrbestandteile verhindern.

Fig. 3 zeigt eine Perspektivdarstellung der Vorrichtung 1 zur Abgasübergabe. Man erkennt dabei im hinteren Bereich 8b des Rohrabschnitts 5 die Verbindung zum Befestigen der zweite Gelenkwelle 7b in Form einer Sternverbindung, an dessen Mittelpunkt die Gelenkwelle 7b abgeht. Dem Fachmann ist bewusst, dass es eine Vielzahl von möglichen Verbindungsarten der Gelenkwelle 7a, 7b an ihrem jeweiligen Endbereich des Rohrabschnitts 5 gibt, sodass die dargestellte Umsetzung nur eine von vielen Möglichkeiten ist.

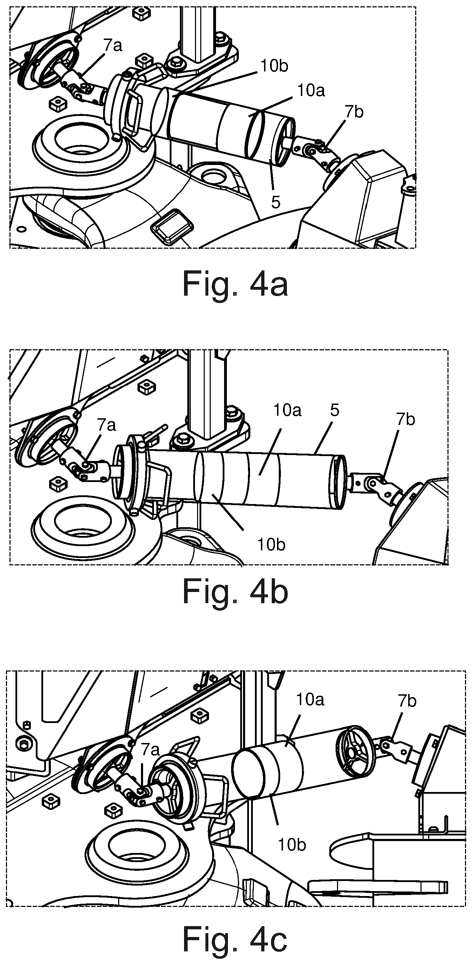

Figs. 4a bis 4c zeigen jeweils eine Perspektivdarstellung der Vorrichtung zur Abgasübergabe bei einem gegenüber dem Vorderwagen verdrehten Hinterwagen, wobei die Verdrehung von den Figuren 4a bis 4c immer mehr zunimmt.

Darüber hinaus ist der Rohrabschnitt 5 transparent dargestellt, sodass man die sich aufeinander zu bewegenden Anschlagelemente 10a, 10b erkennen kann, bis diese sich in Fig. 4c berühren und eine weitere Längenzugabe des Rohrabschnitts 5 unterbinden. So ist der Hinterwagen 4 in Fig. 4a nur leicht, in Fig. 4b mittel und in Fig. 4c stark (etwa 38° bis 40°) gegenüber dem Vorderwagen 3 verdreht, sodass sich der Rohrabschnitt 5 in seine maximale Längenausdehnung ausgezogen wird. Man erkennt dabei auch die zunehmende Winkelveränderung einer jeweiligen Gelenkwelle 7a, 7b, wie sie für das jeweilige Verdrehen des Hinterwagens 4 gegenüber dem Vorderwagen 3 erforderlich ist.

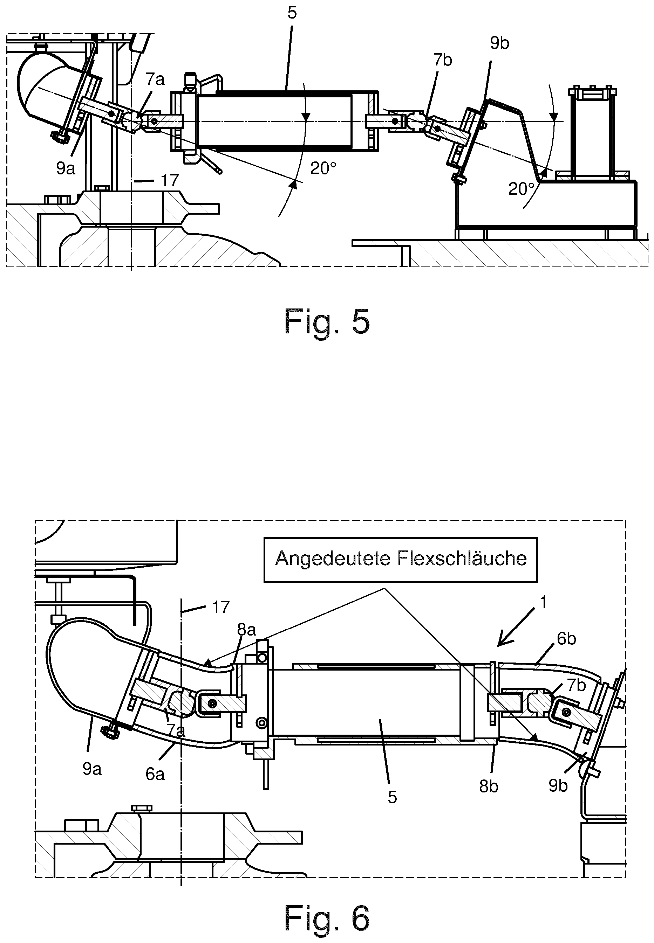

Fig. 5 zeigt eine Schnittansicht der Vorrichtung 1 zur Abgasübergabe zusammen mit den entsprechenden Befestigungsabschnitten 9a, 9b am Vorderwagen und am Hinterwagen. Zum einen erkennt man, dass die Abgabe des Abgases von dem Vorderwagen 3 im Bereich des ersten Befestigungsabschnitts 9a derart erfolgt, dass hierbei ein Winkel von etwa 20° gegenüber einer Horizontalen vorliegt, der mithilfe des ersten Schlauchs 6a (nicht dargestellt) zum waagrecht angeordneten Rohrabschnitt 5 kompensiert wird. Weiter erkennt man, dass der Übergabepunkt an den Hinterwagen 4 ebenfalls gegenüber einer Horizontalen ausgelenkt ist, wobei die Auslenkung betragsmäßig genau dem Winkelwert entspricht, wie er beim vorderwagenseitigen Abgabeabschnitt des Abgases vorliegt.

Diese vor Ausrichtung der Gelenkwellen 7a, 7b erweitert den Winkel der Bewegungsrichtung so weit, dass ein großer Bereich sämtlicher möglicher Bewegungen von Vorder- und Hinterwagen durch die erfindungsgemäße Vorrichtung 1 problemlos abgedeckt werden können. Vorteilhaft hat sich in diesem Zusammenhang insbesondere herausgestellt, dass im Ruhezustand des Fahrzeugs 100 in beiden Gelenkwellen 7a, 7b eine Knickung vorliegt, deren Betrag im Wesentlichen gleich ist.

Darüber hinaus erkennt man mit dem Bezugszeichen 17 die Knickachse des Knick-Drehgelenks zwischen Vorderwagen 3 und Hinterwagen 4. Diese verläuft durch die Gelenkwelle 7A und schneidet insbesondere eine der beiden dort vorhandenen Achsen der Gelenkwelle 7a. Wäre die Ausgabe des Abgases vom Vorderwagen im Bereich des ersten Befestigungsabschnitts 9a nicht geneigt, sondern wie der Rohrabschnitt 5 waagerecht angeordnet, würde die Knickachse 17 des Knick-Drehgelenks mit einer Achse der Gelenkwelle 7a vorteilhafter Weise fluchten.

Fig. 6 zeigt eine Schnittansicht der Vorrichtung 1 zur Abgasübergabe zusammen mit einem ersten flexiblen 6a Schlauch und einem zweiten flexiblen 6b Schlauch zum fluidischen Anbinden der Übergabepunkte von Vorderwagen 3 und Hinterwagen 4. Man erkennt, dass der erste flexible Schlauch 6a sowie der zweite flexible Schlauch 6b in seinem Inneren jeweils die zugehörige Gelenkwelle 7a, 7b aufnimmt.

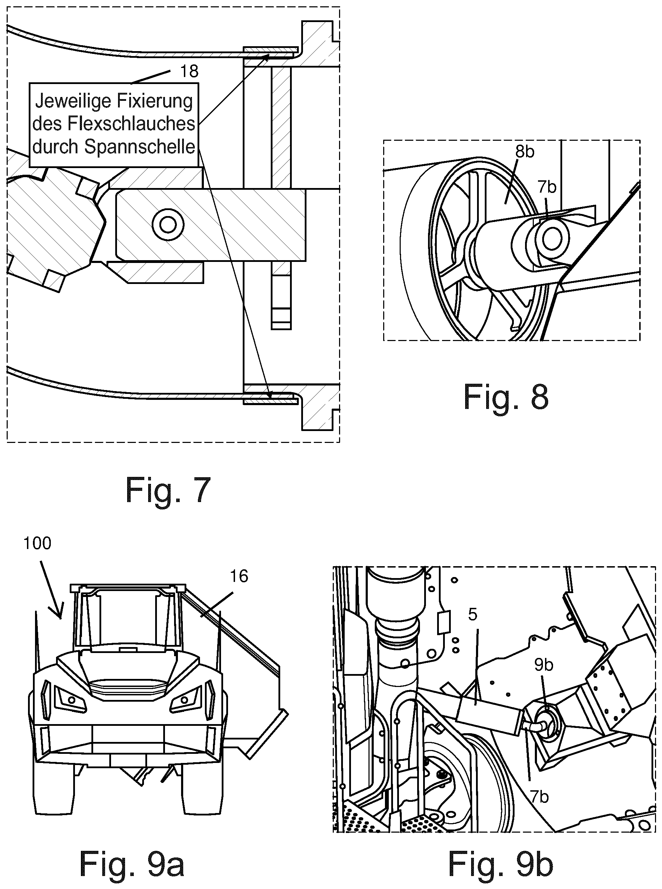

Fig. 7 zeigt eine Draufsicht auf den ersten Endbereich des Rohrabschnitts 5 in einer Schnittebene, an dem der erste Schlauch 6a mit einer Spannschelle 18 angebunden ist. Spannschellen 18 haben sich bewährt, wenn es um die Klemmung von Schlauchabschnitten an entsprechenden Auskragungen geht.

Fig. 8 zeigt eine Perspektivdarstellung eines Endbereichs 8b des Rohrabschnitts 5 mit einer Sternverbindung zum Anordnen einer Gelenkwelle 7b. Man erkennt, dass von der Innenseite des zweiten Endbereich 8b mehrere stegförmig zueinander angeordnete Abschnitte nach innen abstehen und sich in einem Mittelpunkt vereinigen, an dem die Gelenkwelle 7b befestigt ist. Dem Fachmann ist klar, dass es eine Vielzahl weiterer Möglichkeiten zum Anbinden der Gelenkwelle 7b an dem zweiten Endbereich 8b des Rohrabschnitts 5 gibt, die ein Umströmen mit Gas zulassen.

Fig. 9a zeigt eine Frontalansicht einer mobilen Arbeitsmaschine in Form eines Muldenkippers, bei dem der Hinterwagen mit der Mulde gegenüber dem Vorderwagen verdreht ist. Der Rollwinkel des Hinterwagen 4 beträgt dabei gegenüber dem noch gerade ausgerichteten Vorderwagen 3 in etwa 38° und kann bspw. ein Maximum der Verdrehung darstellen, die die Vorrichtung 1 zur Abgasübergabe ohne ein Auftrennen des Rohrabschnitts 5 kompensieren kann.

Fig 9b zeigt eine Darstellung der Vorrichtung zur Abgasübergabe bei nach Fig. 9a dargestellten gegenüber dem Vorderwagen verdrehten Hinterwagen, bei der man den in seine maximale Längsausdehnung gebrachten Rohrabschnitt 5 erkennen kann.

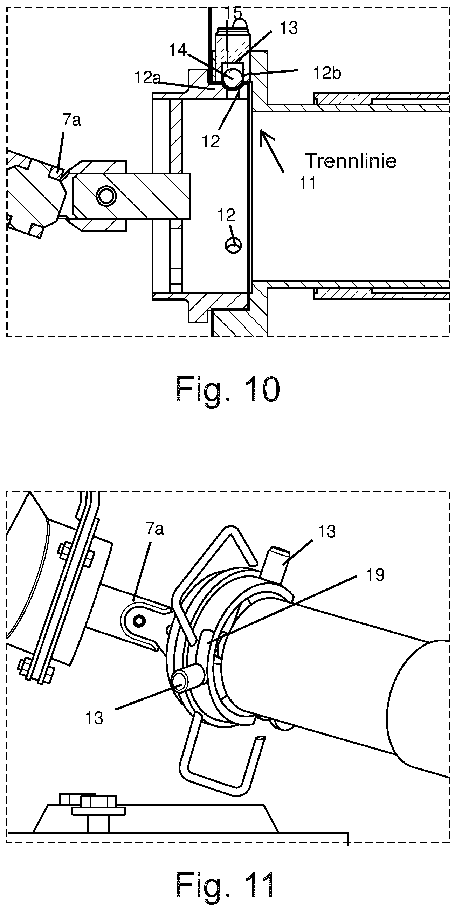

Fig. 10 zeigt eine Schnittansicht einer Trenneinrichtung 11 zum beschädigungsfreien Auftrennen einer Fluidverbindung zwischen Vorder- und Hinterwagen im Rohrabschnitt 5. Die Trenneinrichtung 11 verfügt dabei über einen ersten Trennring 12a und einen zweiten Trennring 12b, die miteinander soll in Wirkverbindung stehen, dass erst bei Überschreiten einer Kraft, die die beiden Rohrbestandteile auseinanderzieht, eine Trennung durch die Trenneinrichtung 11 erfolgt.

So kann ein erster Trennring 12a an seiner Außenseite umfangsseitig von einem zweiten Trennring 12b umgeben sein, wobei der erste Trennring 12a an seiner Außenseite eine Mulde 12 aufweist, in die ein Druckfederelement 13 des zweiten Trennrings 12b eingreift. Dieses Druckfederelement 13 kann eine Kugel 14 umfassen, die aufgrund eines Druckfederelements 15 von dem zweiten Trennring 12b an dessen Innenseite absteht und so in die Mulde 12 eingreift. Dadurch kommt es zu einer Klemmung der beiden Trennringe 12a, 12b, die erst bei einem Ausüben einer signifikanten Kraft lösbar ist. Dies geschieht, indem bei einem Auseinanderziehen der beiden Trennringe 12a, 13a eine so große Kraft wirkt, dass sich die Kugel 14 entgegen der von dem Federelement 15 ausgeübten Kraft nach innen bewegt und aus der Mulde 15 rutscht. Dadurch erfolgt die Trennung der beiden Trennringe 12a, 12b und die Fluidverbindung, welche durch den Rohrabschnitt 5 hergestellt ist, ist aufgetrennt.

Fig. 11 zeigt eine Explosionsansicht der Trenneinrichtung 11, die in der Art eines Bajonettverschlusses zusammenführbar ist. Man erkennt, dass der erste Trennring 12a eine Mulde 12 aufweist, die eine spezifische Formgebung besitzt und einer Bajonettführung entspricht. Demnach ist es also möglich, dass das Druckfederelement 13 mit seinem nach innen abstehenden federnden Element (die Kugel 14) nach der Art eines Bajonettverschlusses in die Führung 19 der Mulde 12 eingreift und es somit zu einem Verbinden der beiden Trennringe 12a, 12b kommt. Vorteil hieran ist, dass kein Werkzeug für das Verbinden erforderlich ist und nach einem Auftrennen der Verbindung diese auf einfache Art und Weise wieder zusammenfügbar ist.

Weiter kann vorgesehen sein, dass der erste Trennring 12a und/oder der zweite Trennring 12b mit einem Griff versehen ist, der das händische Zusammenfügen der beiden Bestandteile erleichtert.

### Bezugszeichenliste:

- 1: Vorrichtung zur Abgasübergabe
- 2: Knick-Drehgelenk
- 3: Vorderwagen
- 4: Hinterwagen
- 5: Rohrabschnitt
- 6a: erster flexibler Schlauch
- 6b: zweiter flexibler Schlauch
- 7a: erste Gelenkwelle
- 7b: zweite Gelenkwelle
- 8a: erster Endbereich
- 8b: zweiter Endbereich
- 9a: erster Befestigungsabschnitt (bspw. am Vorderwagen)
- 9b: zweiter Befestigungsabschnitt (bspw. am Hinterwagen)
- 10a: erstes Anschlagelement
- 10b: zweites Anschlagelement
- 11: Trenneinrichtung
- 12a: erster Trennring
- 12b: zweiter Trennring
- 12: Mulde
- 13: Druckfederelement
- 14: Kugel
- 15: Federelement
- 16: Mulde
- 17: Drehachse des Knick-Drehgelenks
- 18: Spannschelle
- 19: Bajonettführung
- 100: mobile Arbeitsmaschine

## Patentansprüche

1. Vorrichtung (1) zur Abgasübergabe zwischen einem Vorderwagen (3) und einem Hinterwagen (4) einer mobilen Arbeitsmaschine (100), insbesondere Muldenkipper, wobei Vorder- und Hinterwagen (3, 4) durch ein Knick-Drehgelenk (2) getrennt sind, umfassend:
einen in seiner Länge variierbaren Rohrabschnitt (5), um Abgas zu leiten,
einen ersten flexiblen Schlauch (6a), der mit einem ersten Endbereich des Rohrabschnitts (5) zusammenwirkt, um Abgas in den Rohrabschnitt (5) einzuleiten, und
einen zweiten flexiblen Schlauch (6b), der mit einem zweiten Endbereich des Rohrabschnitts (5) zusammenwirkt, um Abgas aus dem Rohrabschnitt (5) auszuleiten, wobei
eine erste Gelenkwelle (7a) im ersten Endbereich (8a) vorgesehen ist, deren distales Ende für eine starre Anbringung an einem Befestigungsabschnitt (9a; 9b) des Vorderwagens (3) oder des Hinterwagens (4) der Arbeitsmaschine (100) ausgebildet ist, und
eine zweite Gelenkwelle (7b) im zweiten Endbereich (8b) vorgesehen ist, deren distales Ende für eine starre Anbringung an einem Befestigungsabschnitt (9a; 9b) des Vorderwagens (3) oder des Hinterwagens (4) der Arbeitsmaschine (100) ausgebildet ist, wobei
der erste Schlauch (6a) die erste Gelenkwelle (7a) und der zweite Schlauch (6b) die zweite Gelenkwelle (7b) aufnimmt.

2. Vorrichtung (1) nach dem vorhergehenden Anspruch 1, wobei die erste Gelenkwelle (7a) und/oder die zweite Gelenkwelle (7b) ein Kardangelenk oder ein Kreuzgelenk ist.

3. Vorrichtung (1) nach einem der vorhergehenden Ansprüche, wobei der in seiner Länge variierbare Rohrabschnitt (5) zwei Metallrohre unterschiedlichen Durchmessers umfasst, die ineinander ein- oder ausschiebbar sind.

4. Vorrichtung (1) nach dem vorhergehenden Anspruch 3, wobei das Metallrohr mit kleinerem Durchmesser ein am Außenumfang angeordnetes Anschlagelement (10a), insbesondere einen umlaufenden Ring, und das Metallrohr mit größerem Durchmesser ein am Innenumfang angeordnetes Anschlagelement (10b), insbesondere einen umlaufenden Ring, aufweist, sodass durch die jeweiligen Anschlagelemente (10a, 10b) eine maximale Länge des in seiner Länge variierbaren Rohrabschnitts (5) festgelegt ist.

5. Vorrichtung (1) nach einem der vorhergehenden Ansprüche, wobei der Rohrabschnitt (5) zwischen dem ersten Endbereich (8a) und dem zweiten Endbereich (8b) eine Trenneinrichtung (11) umfasst, die dazu ausgelegt ist, nach einem Erreichen der maximalen Länge des Rohrabschnitts (5) und einem weiteren Einwirken einer Kraft in Richtung eines weiteren Verlängern des Rohrabschnitts (5) den Rohrabschnitt (5) aufzutrennen, sodass der erste Endbereich (8a) und der zweite Endbereich (8b) nicht mehr über einen durch den Rohrabschnitt (5) verlaufenden Strömungskanal miteinander in Verbindung stehen.

6. Vorrichtung (1) nach dem vorhergehenden Anspruch 5, wobei die Trenneinrichtung (11) zwei sich in Längsrichtung des Rohrabschnitts (5) überlagernde Trennringe (12a, 12b) aufweist, die sich bei einem Überschreiten eines in Längsrichtung des Rohrabschnitts (5) wirkenden Kraftschwellenwerts voneinander trennen.

7. Vorrichtung (1) nach dem vorhergehenden Anspruch 6, wobei der erste Trennring (12a) an seiner Außenkontur oder seiner Innenkontur eine Mulde (12) aufweist und der zweite Trennring (12b) ein Druckfederelement (13) aufweist, um in die Mulde (12) des ersten Trennrings (12a) einzugreifen, wobei vorzugsweise das Druckfederelement (13) eine Kugel (14) und ein Federelement (15) aufweist, um die Kugel (14) mit Federkraft in Richtung der Mulde (12) des ersten Trennrings (12a) zu drängen, sodass eine Verbindung der beiden Trennringe (12a, 12b) nur dann erfolgt, wenn eine die beiden Trennringe (12a, 12b) auseinanderziehende Kraft dazu führt, dass die in der Mulde (12) befindliche Kugel (14) entgegen der Federspannung bewegt wird und es durch ein Herausgleiten der Kugel (14) aus der Mulde (12) zu einem Trennen der Trennringe (12a, 12b) kommt.

8. Vorrichtung (1) nach einem der vorhergehenden Ansprüche 5-7, wobei die Trenneinrichtung (11) nach einem Trennen durch einen Bajonettverschluss wieder zusammenfügbar ist, insbesondere wobei die Mulde (12) die typische Hakenform einer Bajonettführung des Bajonettverschlusses aufweist und das Druckfederelement (13) das entsprechend in die Bajonettführung einzuführende Verriegelungselement darstellt.

9. Vorrichtung (1) nach einem der vorhergehenden Ansprüche, wobei die erste Gelenkwelle (7a) und/oder die zweite Gelenkwelle (7b) über eine Verbindung, insbesondere eine Sternverbindung, die vom Innenumfang des zugehörigen Endbereichs (8a, 8b) abgeht, am Rohrabschnitt (5) befestigt ist.

10. Vorrichtung (1) nach einem der vorhergehenden Ansprüche, wobei der erste Schlauch (6a) und/oder der zweite Schlauch (6b) mittels einer Spannschelle an dem zugehörigen Endbereich (8a, 8b) angebunden ist.

11. Mobile Arbeitsmaschine (100), insbesondere Baufahrzeug wie ein Muldenkipper, mit einem Vorderwagen (3) und einem Hinterwagen (4), die durch ein Knick-Drehgelenk (2) voneinander getrennt sind, und mit einer Vorrichtung (1) nach einem der vorhergehenden Ansprüche zum Überführen eines Abgases zwischen Vorder- und Hinterwagen (3, 4) über das Knick-Drehgelenk (2) hinweg, wobei insbesondere vorgesehen ist, dass die erste Gelenkwelle (7a) oder die zweite Gelenkwelle (7b) direkt über der Knickachse des Knick-Drehgelenks (2) angeordnet ist.

12. Arbeitsmaschine (100) nach Anspruch 11, wobei ein erster Befestigungsabschnitt zum Abgeben des Abgases an die Abgasübergabe gegenüber der Horizontalen einen Neigungswinkel im Bereich von 0-35°, vorzugsweise 5-30° und bevorzugterweise 15-25° aufweist.

13. Arbeitsmaschine (100) nach einem der vorhergehenden Ansprüche 11 oder 12, wobei ein zweiter Befestigungsabschnitt zum Aufnehmen des Abgases von der Abgasübergabe gegenüber der Horizontalen einen Neigungswinkel im Bereich von 0-35°, vorzugsweise 5-30° und bevorzugterweise 15-25° aufweist.

14. Arbeitsmaschine (100) nach einem der vorhergehenden Ansprüche 11-13, wobei der erste Befestigungsabschnitt und der zweite Befestigungsabschnitt jeweils einen Neigungswinkel aufweisen, der in seinem Vorzeichen gegenüber einer Neigung der Horizontalen verschieden ist, sodass bspw. der erste Befestigungsabschnitt gegenüber der Horizontalen um +20° unter zweite Befestigungsabschnitt um -20° gegenüber der Horizontalen ausgelenkt ist.

15. Arbeitsmaschine (100) nach einem der vorhergehenden Ansprüche 11-14, wobei der erste Befestigungsabschnitt und/oder der zweite Befestigungsabschnitt in seinem zur Abgasübergabe gewandten Endabschnitt jeweils über eine Befestigungsvorrichtung, insbesondere einer Sternverbindung, mit der zugehörigen Gelenkwelle (7a, 7b) starr verbunden ist.

## Claims

1. Device (1) for transferring exhaust gas between a front part (3) and a rear part (4) of a mobile working machine (100), in particular a dump truck, the front and rear parts (3, 4) being separated by an articulated pivot joint (2), comprising:
a tube section (5) of variable length to conduct the exhaust gas,
a first flexible hose (6a) which cooperates with a first end region of the tube section (5) to introduce the exhaust gas into the tube section (5), and
a second flexible hose (6b) which cooperates with a second end region of the tube section (5) to discharge the exhaust gas from the tube section (5), where
a first articulated shaft (7a) is provided in the first end region (8a), whose distal end is configured for rigid installation on a fastening section (9a; 9b) of the front part (3) or the rear part (4) of the working machine (100), and
a second articulated shaft (7b) is provided in the second end region (8b), whose distal end is configured for rigid installation on a fastening section (9a; 9b) of the front part (3) or the rear part (4) of the working machine (100), where
the first hose (6a) receives the first articulated shaft (7a) and the second hose (6b) receives the second articulated shaft (7b).

2. Device (1) according to the preceding claim 1, where the first articulated shaft (7a) and/or the second articulated shaft (7b) is a Cardan joint or a cross joint.

3. Device (1) according to any one of the preceding claims, where the tube section (5) of variable length comprises two metal tubes of different diameters (10) which can be pushed into one another or pulled out of one another.

4. Device (1) according to the preceding claim 3, where the metal tube of smaller diameter has a stop element (10a) arranged on the outer circumference, in particular a peripheral ring, and the metal tube of larger diameter has a stop element (10b) arranged on the inner circumference, in particular a peripheral ring, such that the respective stop elements (10a, 10b) define a maximum length of the tube section (5) of variable length.

5. Device (1) according to any one of the preceding claims, where the tube section (5) comprises, between the first end region (8a) and the second end region (8b), a separating device (11) which is configured, once the maximum length of the tube section (5) has been reached and after application of an additional force in the direction of a further elongation of the tube section (5), to separate the tube section (5) such that the first end region (8a) and the second end region (8b) are no longer connected to one another via a flow channel extending through the tube section (5).

6. Device (1) according to the preceding claim 5, where the separating device (11) has two separating rings (12a, 12b) which overlap in the longitudinal direction of the tube section (5), which separate from one another when a threshold value of force acting in the longitudinal direction of the tube section (5) is exceeded.

7. Device (1) according to the preceding claim 6, where the first separating ring (12a) has a recess (12) on its outer contour or its inner contour and the second separating ring (12b) has a spring-loaded element (13) to engage in the recess (12) of the first separating ring (12a), where the spring-loaded element (13) preferably has a ball (14) and a spring element (15) in order to urge the ball (14) with a spring force towards the recess (12) of the first separating ring (12a) such that a connection of the two separating rings (12a, 12b) is maintained only until a force pulling the two separating rings (12a, 12b) apart causes the ball (14) located in the recess (12) to be displaced against the spring bias and the sliding of the ball (14) out of the recess (12) brings about a separation of the separating rings (12a, 12b).

8. Device (1) according to any one of the preceding claims 5 to 7, where the separating device (11) can be re-assembled after a separation by a bayonet closure, where the recess (12) in particular has the typical hook shape of a bayonet guide of the bayonet closure and the spring-loaded element (13) represents the locking element to be correspondingly inserted into the bayonet guide.

9. Device (1) according to any one of the preceding claims, where the first articulated shaft (7a) and/or the second articulated shaft (7b) are fastened to the tube section (5) by way of a connection, in particular a star connection, which originates from the inner circumference of the respective end region (8a, 8b).

10. Device (1) according to any one of the preceding claims, where the first hose (6a) and/or the second hose (6b) are attached to the respective end region (8a, 8b) by means of a clamp.

11. Mobile working machine (100), in particular a construction vehicle such as a dump truck, comprising a front part (3) and a rear part (4) which are separated from one another by an articulated pivot joint (2), and comprising a device (1) according to any one of the preceding claims for transferring an exhaust gas between the front and rear parts (3, 4) via the articulated pivot joint (2), where in particular it is provided that the first articulated shaft (7a) or the second articulated shaft (7b) is arranged directly above the pivot axis of the articulated pivot joint (2).

12. Working machine (100) according to claim 11, where a first fastening section for discharging the exhaust gas towards the exhaust-gas transfer has an angle of inclination relative to the horizontal in the range of 0 to 35°, preferably 5 to 30°, and more preferably 15 to 25°.

13. Working machine (100) according to any one of the preceding claims 11 or 12, where a second fastening section for receiving the exhaust gas from the exhaust-gas transfer has an angle of inclination relative to the horizontal in the range of 0 to 35°, preferably 5 to 30°, and more preferably 15 to 25°.

14. Working machine (100) according to any one of the preceding claims 11 to 13, where the first fastening section and the second fastening section each have an angle of inclination whose sign is different with respect to an inclination relative to the horizontal, such that, for example, the first fastening section is deflected by +20° relative to the horizontal and the second fastening section by -20° relative to the horizontal.

15. Working machine (100) according to any one of the preceding claims 11 to 14, where the first fastening section and/or the second fastening section are rigidly connected, in their end region facing the exhaust-gas transfer, to the respective articulated shaft (7a, 7b) by way of a fastening device, in particular a star connection.

## Revendications

1. Dispositif (1) pour le transfert de gaz d'échappement entre une partie avant (3) et une partie arrière (4) d'une machine de travail mobile (100), notamment un tombereau, les parties avant et arrière (3, 4) étant séparées par une articulation pivotante (2), comprenant :
une section de tube (5) de longueur variable, pour acheminer le gaz d'échappement,
un premier tuyau flexible (6a) qui coopère avec une première zone d'extrémité de la section de tube (5) pour introduire le gaz d'échappement dans la section de tube (5), et
un deuxième tuyau flexible (6b) qui coopère avec une deuxième zone d'extrémité de la section de tube (5) pour évacuer le gaz d'échappement de la section de tube (5), où
un premier arbre articulé (7a) est prévu dans la première zone d'extrémité (8a), dont l'extrémité distale est réalisée pour une installation rigide sur une section de fixation (9a ; 9b) de la partie avant (3) ou de la partie arrière (4) de la machine de travail (100), et
un deuxième arbre articulé (7b) est prévu dans la deuxième zone d'extrémité (8b), dont l'extrémité distale est réalisée pour une installation rigide sur une section de fixation (9a ; 9b) de la partie avant (3) ou de la partie arrière (4) de la machine de travail (100), où
le premier tuyau (6a) reçoit le premier arbre articulé (7a) et le deuxième tuyau (6b) reçoit le deuxième arbre articulé (7b).

2. Dispositif (1) selon la revendication 1 précédente, où le premier arbre articulé (7a) et/ou le deuxième arbre articulé (7b) sont un joint de Cardan ou un joint croisé.

3. Dispositif (1) selon l'une quelconque des revendications précédentes, où la section de tube (5) de longueur variable comprend deux tubes métalliques de diamètres différents (10) qui peuvent être emboîtés l'un dans l'autre ou déboîtés l'un de l'autre.

4. Dispositif (1) selon la revendication 3 précédente, où le tube métallique de plus petit diamètre présente un élément de butée (10a) agencé sur la circonférence extérieure, notamment une bague périphérique, et le tube métallique de plus grand diamètre présente un élément de butée (10b) agencé sur la circonférence intérieure, notamment une bague périphérique, de telle sorte que les éléments de butée respectifs (10a, 10b) définissent une longueur maximale de la section de tube (5) de longueur variable.

5. Dispositif (1) selon l'une quelconque des revendications précédentes, où la section de tube (5) comprend, entre la première zone d'extrémité (8a) et la deuxième zone d'extrémité (8b), un appareil de séparation (11) qui est conçu pour, une fois la longueur maximale de la section de tube (5) atteinte et après application d'une force supplémentaire dans la direction d'un allongement supplémentaire de la section de tube (5), séparer la section de tube (5) de manière à ce que la première zone d'extrémité (8a) et la deuxième zone d'extrémité (8b) ne soient plus reliées entre elles par l'intermédiaire d'un canal d'écoulement s'étendant à travers la section de tube (5).

6. Dispositif (1) selon la revendication 5 précédente, où l'appareil de séparation (11) présente deux bagues de séparation (12a, 12b) qui se superposent dans la direction longitudinale de la section de tube (5), qui se séparent l'une de l'autre lors d'un dépassement d'une valeur de seuil de force agissant dans la direction longitudinale de la section de tube (5).

7. Dispositif (1) selon la revendication 6 précédente, où la première bague de séparation (12a) présente une cavité (12) sur son contour extérieur ou son contour intérieur et la deuxième bague de séparation (12b) présente un élément à ressort de pression (13) pour s'engager dans la cavité (12) de la première bague de séparation (12a), où l'élément à ressort de pression (13) présente de préférence une bille (14) et un élément à ressort (15) afin de pousser la bille (14) avec une force de ressort en direction de la cavité (12) de la première bague de séparation (12a) de telle sorte qu'une liaison des deux bagues de séparation (12a, 12b) n'ait lieu que lorsqu'une force écartant les deux bagues de séparation (12a, 12b) entraîne le déplacement de la bille (14) se trouvant dans la cavité (12) à l'encontre de la tension de ressort et le glissement de la bille (14) hors de la cavité (12) provoque une séparation des bagues de séparation (12a, 12b).

8. Dispositif (1) selon l'une quelconque des revendications 5 à 7 précédentes, où l'appareil de séparation (11) peut être réassemblé après une séparation par une fermeture à baïonnette, où la cavité (12) présente notamment la forme en crochet typique d'un guide à baïonnette de la fermeture à baïonnette et l'élément à ressort de pression (13) représente l'élément de verrouillage à insérer de manière correspondante dans le guide à baïonnette.

9. Dispositif (1) selon l'une quelconque des revendications précédentes, où le premier arbre articulé (7a) et/ou le deuxième arbre articulé (7b) sont fixés à la section de tube (5) par l'intermédiaire d'une liaison, notamment d'une liaison en étoile, qui part de la circonférence intérieure de la zone d'extrémité correspondante (8a, 8b).

10. Dispositif (1) selon l'une quelconque des revendications précédentes, où le premier tuyau (6a) et/ou le deuxième tuyau (6b) sont rattachés à la zone d'extrémité correspondante (8a, 8b) au moyen d'un collier de serrage.

11. Machine de travail mobile (100), notamment véhicule de chantier tel qu'un tombereau, comprenant une partie avant (3) et une partie arrière (4) qui sont séparées l'une de l'autre par une articulation pivotante (2), et comprenant un dispositif (1) selon l'une quelconque des revendications précédentes pour transférer un gaz d'échappement entre la partie avant et arrière (3, 4) par l'intermédiaire de l'articulation pivotante (2), où **il** est notamment prévu que le premier arbre articulé (7a) ou le deuxième arbre articulé (7b) est agencé directement au-dessus de l'axe de pivotement de l'articulation pivotante (2).

12. Machine de travail (100) selon la revendication 11, où une première section de fixation pour évacuer le gaz d'échappement vers le transfert de gaz d'échappement présente un angle d'inclinaison par rapport à l'horizontale dans la plage de 0 à 35°, de préférence de 5 à 30° et préférentiellement de 15 à 25°.

13. Machine de travail (100) selon l'une quelconque des revendications 11 ou 12 précédentes, où une deuxième section de fixation pour recevoir le gaz d'échappement provenant du transfert de gaz d'échappement présente un angle d'inclinaison par rapport à l'horizontale dans la plage de 0 à 35°, de préférence de 5 à 30° et préférentiellement de 15 à 25°.

14. Machine de travail (100) selon l'une quelconque des revendications 11 à 13 précédentes, où la première section de fixation et la deuxième section de fixation présentent chacune un angle d'inclinaison dont le signe est différent par rapport à une inclinaison de l'horizontale, de telle sorte que, par exemple, la première section de fixation est déviée de +20° par rapport à l'horizontale et la deuxième section de fixation de -20° par rapport à l'horizontale.

15. Machine de travail (100) selon l'une quelconque des revendications 11 à 14 précédentes, où la première section de fixation et/ou la deuxième section de fixation sont reliées de manière rigide à l'arbre articulé (7a, 7b) correspondant dans leur section d'extrémité tournée vers le transfert de gaz d'échappement, respectivement par l'intermédiaire d'un dispositif de fixation, notamment d'une liaison en étoile.
